# EUROPÄISCHE PATENTSCHRIFT

(11) **EP 1 394 402 B1**
(45) Veröffentlichungstag und Bekanntmachung des Hinweises auf die Patenterteilung: **07.02.2007**
(21) Anmeldenummer: 03006980.1
(22) Anmeldetag: 27.03.2003
(51) Int. Cl.: F02M 55/00, F02M 69/46, F02M 61/14, B29C 45/16

(54) **Steckverbindung für medienführende Leitungen**
Connector for fluid conveying conduits
Connecteur pour conduites de transport de fluide

(30) Priorität: 30.08.2002 DE 10240130
(43) Veröffentlichungstag der Anmeldung: 03.03.2004
(73) Patentinhaber: ROBERT BOSCH GMBH, 70442 Stuttgart (DE)
(72) Erfinder: Krimmer, Erwin, 73655 Pluederhausen (DE); Knis, Wolfram, 73529 Schwaebisch-Gmuend (DE)

(56) Entgegenhaltungen:
- EP-A- 0 374 577
- DE-A- 19 757 387
- US-A- 5 799 986

## Beschreibung

### Technisches Gebiet

In Verbrennungskraftmaschinen von Kraftfahrzeugen zirkuliert das Kühlmedium in einem geschlossenen Kreislauf, während bei der Kraftstoffförderung der Kraftstoff den Einspritzventilen zugeführt wird, in die Brennräume gelangt und lediglich ein Teil des Kraftstoffes durch Rücklaufleitungen in den Tank zurückströmt. Während die Kraftstoffzuführung zu den Einspritzventilen oder Injektoren der Verbrennungskraftmaschine - je nach Bauart - auf einem höheren Druckniveau erfolgt, so herrscht im Rücklaufleitungssystem für Kraftstoff zum Kraftstofftank ein niedrigeres Druckniveau. Es ist erforderlich, jeden Injektor bzw. jedes Einspritzventil der Verbrennungskraftmaschine mit dem Kraftstofftank zu verbinden, so dass eine Rückführung überschüssigen Kraftstoffes in den Tank gewährleistet ist.

### Stand der Technik

DE 199 15 695 A1 bezieht sich auf ein Einlasselement aus Kunststoff und ein Verfahren zu dessen Herstellung. Ein Drosselkörper enthält einen inneren Hauptabschnitt aus Kunststoff, ferner einen Nebenabschnitt aus Kunststoff, der zusammenhängend mit einem Außenumfang des Hauptabschnittes gebildet ist und ein Vereisungsverhinderungsrohr, welches in den Nebenabschnitt eingebettet ist. Der zylindrisch konfigurierte Hauptabschnitt mit im Wesentlichen gleichmäßiger Wanddicke wird in einem ersten Formschritt gebildet, wodurch Schrumpf- und Verwerfungserscheinungen unterdrückt werden. Dadurch wird die erforderliche Rundheit oder Kreisförmigkeit einer Innenumfangsfläche des Hauptabschnittes gewährleistet. Der Nebenabschnitt wird in einem anschließenden zweiten Formschritt gebildet, so dass eine Außenseite des Hauptabschnittes abgedeckt wird, um dadurch einen Drosselkörper mit einer gewünschten Form herzustellen. Die Temperatur eines Abschnittes des Formwerkzeuges, der zu der Innenumfangsfläche des Hauptabschnittes weist, ist niedriger eingestellt als die Temperatur des anderen Abschnittes des Formwerkzeuges, wodurch die Innenumfangsfläche des Hauptabschnittes, bei der es auf Dimensionsgenauigkeit ankommt, früher gekühlt werden kann als der andere Abschnitt, um Schrumpfungserscheinungen zu unterbinden. Werden zum Formen des Hauptabschnittes und des Nebenabschnittes unterschiedliche Typen von Kunststoffmaterial verwendet, wird der Freiheitsgrad bei der Materialwahl erhöht.

DE 101 37 771 bezieht sich auf eine Drosselklappeneinheit mit integrierter Drosselklappe. Eine Drosselklappeneinheit ist einem zwei Gehäusehälften umfassenden Drosselgehäuse aufgenommen, an welchem ein Aufnahmegehäuse für einen die Drosselklappeneinheit betätigenden Stellantrieb angeformt ist. Die Drosselklappeneinheit wird im Spritzgießverfahren in einem Arbeitsgang einstückig unter Ausbildung einer Rahmenstruktur gefertigt, die eine Klappenfläche beidseits einer Lagerelemente aufweisenden Klappenwelle umgibt. Die Drosselklappeneinheit wird bevorzugt in 2-Komponententechnik in einem Arbeitsgang aus höherwertigem Material gefertigt.

DE 39 07 764 A1 hat einen Kraftstoffverteiler für Kraftstoffeinspritzanlagen von Verbrennungskraftmaschinen zum Gegenstand. Dieser Kraftstoffverteiler für Kraftstoffeinspritzanlagen mit mindestens einem Kraftstoffeinspritzventil mit einem Ventilträger weist eine Aufnahmebohrung für das Kraftstoffeinspritzventil und eine die Aufnahmebohrung umgebenden Stirnflansch auf. An diesem stützt sich das Kraftstoffeinspritzventil mittels eines Kragens ab. Zur Lagefixierung des Kraftstoffeinspritzventiles sind unabhängig von einer noch aufzusetzenden Steckerhaube der Stirnflansch des Ventilträgers und der Kragen des Kraftstoffeinspritzventils als miteinander korrespondierenden Teile eines Bajonettverschlusses ausgebildet. Die Steckerhaube wird als zusätzliches Verriegelungsmittel verwendet und greift hierzu mit Sperrzapfen formschlüssig in die der Ver- bzw. Entriegelung dienenden Aussparungen im Bajonettverschluss ein.

DE 197 25 076 A1 bezieht sich auf eine Brennstoffeinspritzanlage. Die Brennstoffeinspritzanlage zum Einspritzen von Brennstoff in eine Brennkraftmaschine umfasst zumindest ein Brennstoffeinspritzventil, das an einem Zulaufabschnitt eine Brennstoff-Einlassöffnung aufweist sowie eine Brennstoffverteilerleitung, die für jedes Brennstoffeinspritzventil eine mit der Brennstoff-Einlassöffnung des Brennstoffeinspritzventiles verbindbare Brennstoff-Auslassöffnung und einen sich an die Brennstoff-Auslassöffnung stromabwärts anschließenden Verbindungsstutzen aufweist. Es ist jeweils eine die Brennstoff-Einlassöffnung jedes Brennstoffeinspritzventiles mit der zugeordneten Brennstoff-Auslassöffnung der Brennstoff-Verteilerleitung verbindende Verbindungsvorrichtung vorgesehen. Die Verbindungsvorrichtung umfasst einen ringförmigen Dichtungsträger und eine in die Brennstoff-Einlassöffnung einsetzbare Buchse. Der ringförmig ausgebildete Dichtungsträger weist ein erstes Dichtungselement zur Abdichtung des Dichtungsträgers gegenüber dem Zulaufabschnitt des Brennstoffeinspritzventiles und ein zweites Dichtungselement zur Abdichtung des Dichtungsträgers gegenüber dem Verbindungsstutzen der Brennstoff-Verteilerleitung auf.

Die EP 0 374 577 A2 zeigt ein Verfahren zum Herstellen eines Schiebers zur Verwendung in einem Reißverschluss. Dieser Schieber ist aus einem Schieberkörper und einem Griff gebildet. In einem ersten Einspritzschritt wird geschmolzener Kunststoff in den Schieberkörper-Formhohlraum eingespritzt und dort für eine Verfestigungsperiode belassen. In einem zweiten Einspritzschritt wird geschmolzenes Material, das andere Eigenschaften als der in den Schieberkörper-Formhohlraum eingespritzte Kunststoff hat, in den Griff-Formhohlraum eingespritzt und dort für eine Verfestigungsperiode belassen. Bei diesem Verfahren hat der während des zweiten Einspritzschritts eingespritzte Kunststoff einen größeren Wärmeschrumpfungskoeffizienten als der während des ersten Einspritzschritts eingespritzte Kunststoff.

### Darstellung der Erfindung

Durch die erfindungsgemäße Lösung kann eine kostengünstig herstellbare Steckverbindung für medienführende Leitungen, wie sie Kraftstoffleitungen an Verbrennungskraftmaschinen darstellen, bereitgestellt werden. Die erfindungsgemäße Steckverbindung für medienführende Leitungen wie zum Beispiel Rücklaufleitungen an Kraftstoffinjektoren von Verbrennungskraftmaschinen, bietet den Vorteil, dass die Steckrichtung und die Montagerichtung der Steckverbindung identisch sind. Dadurch lässt sich die erfindungsgemäß vorgeschlagene Steckverbindung unter beengten Einbauverhältnissen einsetzen, wo der erforderliche Freiraum zur Montage- bzw. Demontage einer Steckverbindung zum Anschluss der Rücklaufleitung begrenzt ist. Werden der Steckerkörper und einen diesen absichernde Sicherungshülse der Steckverbindung im 2-Komponenten-Spritzgießverfahren hergestellt, ist keine separate Montage einer Steckersicherung mehr erforderlich. Die in die Steckverbindung integrierte Steckersicherung ermöglicht das Freihalten von Flächen am Kraftstoffinjektor, an denen dieser beschriftet oder mit auslesbaren Bar-Code-Flächen versehen werden kann. Eine Beschriftung von Injektoren ist erforderlich, da diese zum Endeinbau an die Kfz-Hersteller geliefert werden und dort in der Serienmontage angebracht werden. Eine Erkennung der jeweils eingebauten Kraftstoffinjektoren bzw. der angelieferten Charge ist erstrebenswert, da er eine reibungslosere Abwicklung der Endmontage von Kraftstoffinjektoren im Rahmen der Endmontage bei Automobilherstellern unterstützt.

Die erfindungsgemäß vorgeschlagene Steckverbindung für medienführende Leitungen kann am Kraftstoffinjektor in eingerasteter Lage um 360° frei verdreht werden. Dies ist insbesondere dann wichtig, wenn beengte Einbauverhältnisse im Zylinderkopfbereich an Verbrennungskraftmaschinen eine bestimmte Führung der Kraftstoffleitungen am Zylinderkopf erfordern und zum Anschluss der Rücklaufleitung die Drehlage der Steckverbindung - unter gleichzeitiger Aufrechterhaltung der Abdichtungs- bzw. der Sicherungsfunktion - einfach angepasst werden kann.

Ferner ist bei der erfindungsgemäß vorgeschlagenen Steckverbindung die Möglichkeit der Abfrage der Stecksicherheit gegeben. Diese Abfrage kann mit Hilfe eines Werkzeuges erfolgen, durch das die korrekte Montage der Steckverbindung überprüft wird.

Mit der erfindungsgemäß vorgeschlagenen Steckverbindung lässt sich eine formschlüssige Verriegelung durch eine den Steckerkörper umschlingende Sicherungshülse realisieren. Da diese Sicherungshülse als umschlingende Hülse ausgebildet ist, kann eine verliersichere Verrastung gewährleistet werden und die Beschädigungsgefahr im Vergleich zu einer Verrastung miteinander gegenüberliegenden zungenförmigen Abschnitten, die - wenn als Kunststoffteile gefertigt - bei fehlerhaftem Aufstecken leicht abbrechen können. Die Ausführung der Sicherungshülse als umschlingende Hülse schützt ferner die Anschlussstelle am Kraftstoffinjektor vor Beschädigungen, was Undichtigkeiten an den Anschlussstellen der Rücklaufleitungen am Kraftstoffinjektor und damit den Austritt von Kraftstoff zur Folge haben kann.

Bei der Fertigung der erfindungsgemäß vorgeschlagenen Steckverbindung, kann die Sicherungshülse - ausgebildet als umschlingende Hülse - aus einen ersten Material gegossen werden. Nach dem sich anschließenden Umsetzen der gegossenen Sicherungshülse in eine andere Kavität fungiert ein aus dem ersten Material gefertigter Sicherungshülsenteil als Formwerkzeug für den durch Eingießen eines zweiten Materials in die andere Kavität gefertigten Steckerkörper.

Bei der Fertigung der erfindungsgemäß vorgeschlagenen Steckverbindung im Rahmen des 2-Komponenten-Spritzgießverfahrens, kann vorzugsweise die Sicherungshülse - ausgebildet als umschlingende Hülse - aus einen höherschmelzenden Kunststoffmaterial (Thermoplast) gespritzt werden. Nach dem sich anschließenden Umsetzen der gespritzten Sicherungshülse in einer andere Spritzgießkavität fungiert der aus höherschmelzendem Kunststoffmaterial (Thermoplast) gefertigte Sicherungshülsenteil als Formwerkzeug für den durch Einspritzen eines niederschmelzenden Kunststoffmaterials in die Spritzgießkavität gefertigten Steckerkörper. Weitere mögliche Materialien zur Verwendung bei dem erfindungsgemäßen Verfahren sind Metalle oder andere, einer Kavität flüssig zuführbare Werkstoffe.

Bei einer weiteren Ausführungsform der vorliegenden Erfindung handelt es sich bei dem ersten und dem zweiten Material um das selbe Material. Dabei werden sowohl der Steckerkörper als auch der hülsenförmige Körper aus einem Material hergestellt. Damit der hülsenförmige Körper teilweise als Formwerkzeug für den Steckerkörper dienen kann, muss er bereits so weit ausgehärtet sein, dass das Gießen des Steckerkörpers den hülsenförmigen Körper nicht verformt oder auf eine andere Art beschädigt. Ferner kann durch eine geeignete Temperaturführung ein Erweichen des hülsenförmigen Körpers verhindert werden. Bei Kunststoffmaterialien ist es auch denkbar, ein Verbacken mit dem Steckerkörper durch Polymerisation des hülsenfömigen Körpers zu vermeiden.

### Zeichnung

Anhand der Zeichnung wird die Erfindung nachstehend eingehender beschrieben.

Es zeigt:
- Figur 1, 2: aus dem Stand der Technik bekannte Rücklaufleitungsanschlüsse mit montierbarer/demontierbarer Sicherungsfeder,
- Figur 3.1: eine Ausführungsvariante des erfindungsgemäßen Steckerkörpers mit einseitigem Rücklaufleitungsanschluss,
- Figur 3.2: eine Unteransicht des Steckerkörpers gemäß Fig. 3.1,
- Figur 3.3: einen Halbschnitt durch den Steckerkörper gemäß Fig. 3.1,
- Figur 3.4: einen Schnitt durch den Steckerkörper gemäß Fig. 3.2 entlang III.IV- III.IV,
- Figur 4.1: eine weitere Ausführungsvariante des erfindungsgemäß vorgeschlagenen Steckerkörpers mit beidseitig angeordneten Rücklaufleitungsanschlüssen,
- Figur 4.2: eine Unteransicht des Steckerkörpers gemäß Fig. 4.1,
- Figur 4.3: einen Halbschnitt durch den Steckerkörper gemäß der Darstellung in Fig. 4.1,
- Figur 4.4: einen Schnitt durch den Steckerkörper gemäß Fig. 4.2 entlang IV.IV - IV.IV,
- Figur 5: die erfindungsgemäße Steckerverbindung mit Sicherungshülse in Freigabestellung,
- Figur 6: die erfindungsgemäße Steckerverbindung mit Sicherungshülse in verrasteter Position und
- Figur 7: das Rücklaufleitungssystem an einer 6-Zylinder-Verbrennungskraftmaschine mit den erfindungsgemäßen Steckerverbindungen gemäß den Darstellungen in den Fig. 3.1 und 4.1.

### Ausführungsvarianten

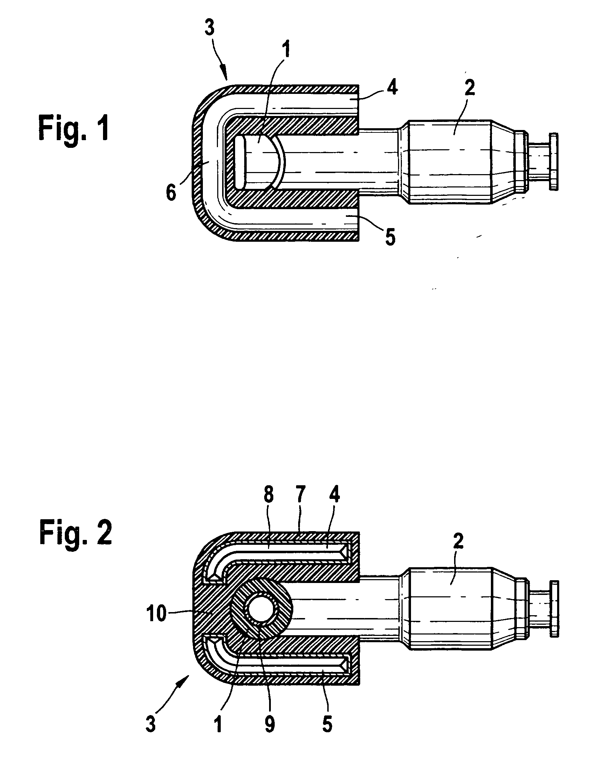

Den Fig. 1 und 2 sind Rücklaufleitungsanschlüsse zu entnehmen, die eine montierbare/demontierbare Sicherungsfeder umfassen.

Gemäß aus dem Stand der Technik bekannten Ausführungsformen bisheriger Steckverbindungen sind ein Rücklaufleitungsanschluss 1 sowie ein Anschlusssockel 2 von einer gebogenen Sicherungsfeder 3 umschlossen. Ein erster Sicherungsfederschenkel 4 sowie ein zweiter Sicherungsfederschenkel 5 liegen an der Umfangsfläche des Anschlusssockels 2 an. Durch die mittels eines Werkzeuges hergestellte Verbindung zwischen dem Rücklaufleitungsanschluss 1 und dem Anschlusssockel 2 wird die Rücklaufleitung dichtend mit dem Anschlusssockel 2 verbunden. Ein Mittelabschnitt 6 der Sicherungsfeder 3 wird durch die am Anschlusssockel 2 anliegenden Sicherungsfederschenkel 4 bzw. den Sicherungsfederschenkel 5 oberhalb der Rücklaufleitung 1 gehalten, so dass sich eine dichtende Verbindung einstellt. Wie der Darstellung gemäß Fig. 2 entnommen werden kann, kann die Sicherungsfeder 3 von einer Ummantelung 7 umschlossen sein. Die Sicherungsfeder 3, welche gemäß den in Fig. 1 und 2 dargestellten Ausführungsvarianten aus dem Stande der Technik als Verbindungselement zwischen Rücklaufleitungsanschluss 1 und Anschlusssockel 2 dient, kann eine Falz 8 umfassen. Der erste Sicherungsfederschenkel 4 bzw. der zweite Sicherungsfederschenkel 5 können in einem Aufnahmebereich 10 der als Kunststoffumspritzung ausgeführten Ummantelung 7 eingegossen sein.

Die mit den in Fig. 1 und 2 dargestellten bekannten Ausführungsvarianten hergestellte Verbindung zwischen dem Anschlusssockel 2 und dem Rücklaufleitungsanschluss 1 benötigt einen relativ großen Freiraum zur Montage bzw. Demontage, da die Sicherungsfederschenkel 4 und 5 mittels eines Werkzeuges gebogen werden müssen, um eine dichtende Verbindung zwischen dem Rücklaufleitungsanschluss 1 und dem Anschlusssockel 2 herzustellen. Dies rührt daher, dass die Steckrichtung und die Montagerichtung der Sicherungsfeder 3 verschieden sind. Die umgebogenen, an den Anschlusssockel 2 angestellten Sicherungsfederschenkel 4 bzw. 5 behindern eine Beschriftung eines Anschlusssockels 2 oder anderen über die in den Fig. 1 und 2 dargestellter Baukomponenten. Ferner stellt die Sicherungsfeder 3 ein separat vorzuhaltendes Montageteil dar.

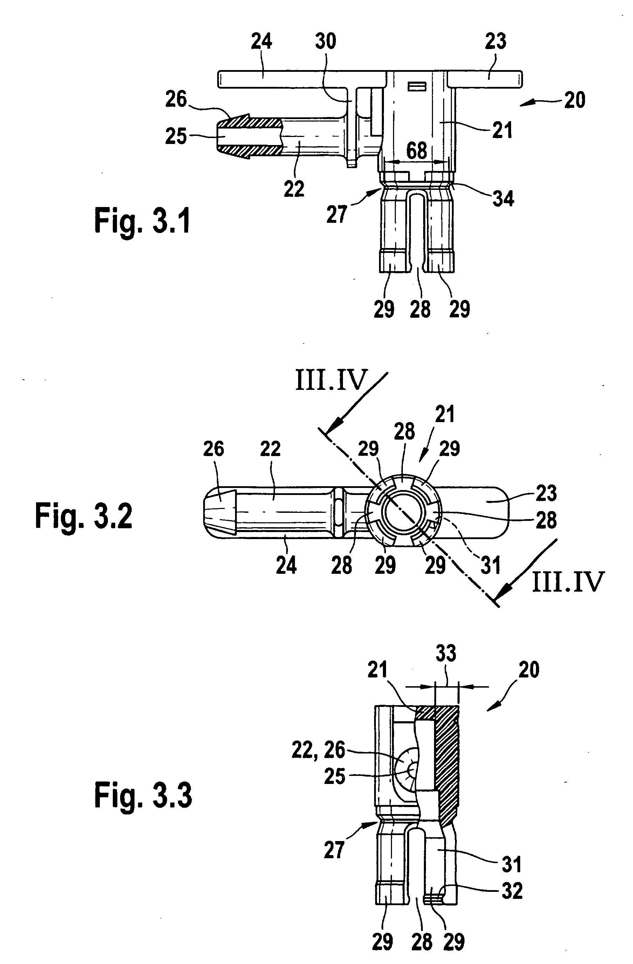

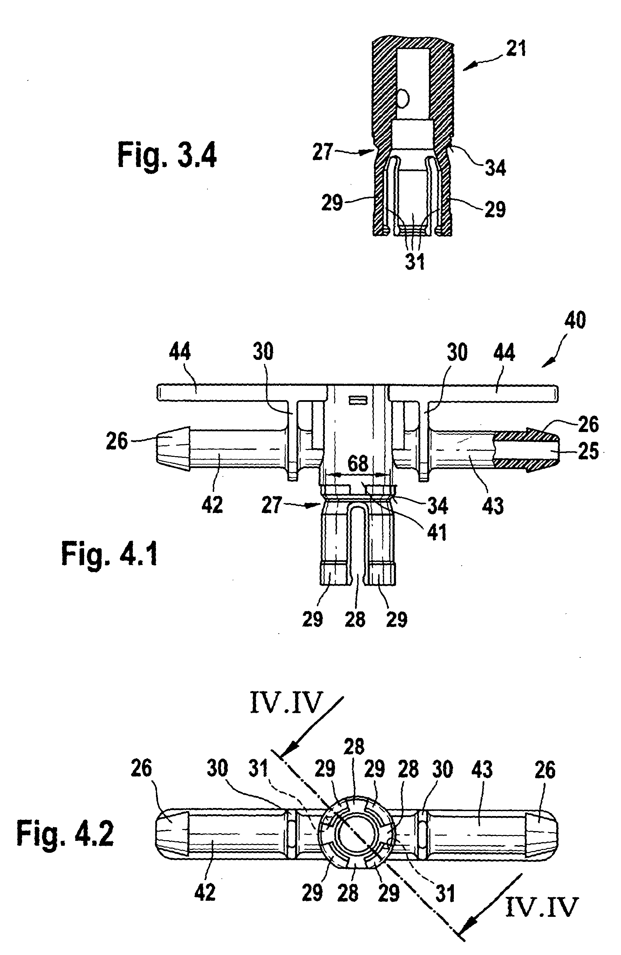

Nachfolgend wird anhand der Figuren 3.1 bis 7 die erfindungsgemäß vorgeschlagene Steckverbindung anhand eines Ausführungsbeispieles einer Steckverbindung eines Kraftstoffinjektors mit einem Rohrleitungssystem näher dargestellt.

Fig. 3.1 zeigt eine Ausführungsvariante eines Steckerkörpers der erfindungsgemäßen Steckverbindung mit einem einseitig angebrachten Rücklaufleitungsanschluss.

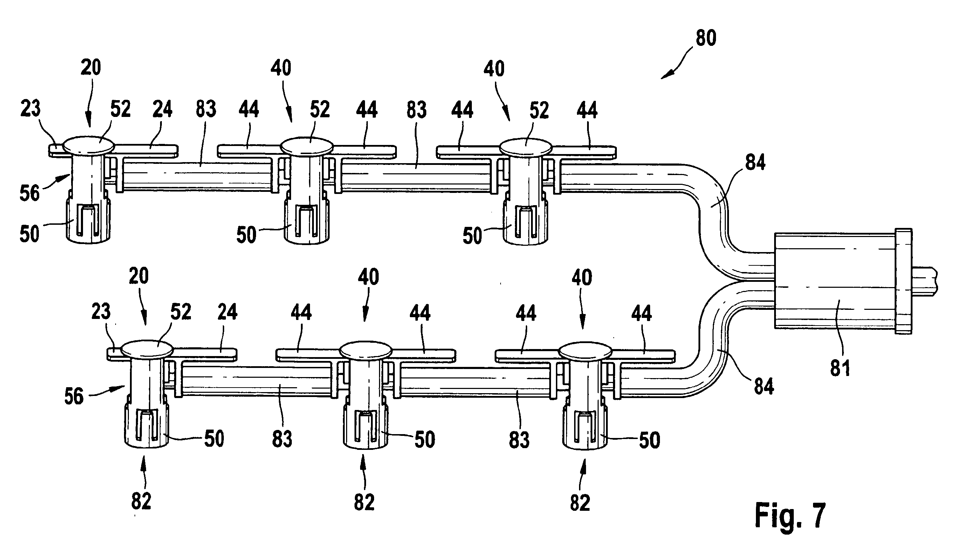

Der in Fig. 3.1 dargestellte Steckerkörper 21 einer ersten Steckverbindung 20 mit einseitigem Anschluss wird im Wege des Spritzgießverfahrens aus einem niederschmelzenden Kunststoffmaterial, wie zum Beispiel einem niederschmelzenden Thermoplasten spritzgegossen. Am Steckerkörper 21 ist ein Leitungsanschluss 22 angespritzt, über dessen Leitungsquerschnitt 25 bei Einsatz der Steckverbindung 20 an einem Kraftstoffinjektor, abgesteuertes Kraftstoffvolumen in den Niederdruckbereich eines Kraftstoffversorgungssystemes zurückströmen kann. Der Leitungsanschluss 22 umfasst innerhalb eines Endbereiches an seiner Außenseite eine Kegelfläche 26, welche ein leichteres Aufschieben eines flexiblen Rohrabschnittes (vgl. Fig. 7) gestattet. Darüber hinaus ist an der Außenumfangsfläche des Leitungsanschlusses 22 ein Steg 30 angespritzt, an dessen der Kegelfläche 26 zuweisender Seite ein auf den Leitungsabschnitt 22 aufgesteckter Leitungsabschnitt anliegt. Der Steg 30 begrenzt die Länge, über welche der in Fig. 3.1 nicht dargestellte Leitungsabschnitt aus einem flexiblen Material auf den Leitungsanschluss 22 am Steckerkörper 21 aufgeschoben wird und stellt gleichzeitig sicher, dass die vorgeschriebene Aufstecklänge zur Herstellung einer dichtenden Verbindung am Leitungsanschluss 22 einfach kontrolliert werden kann.

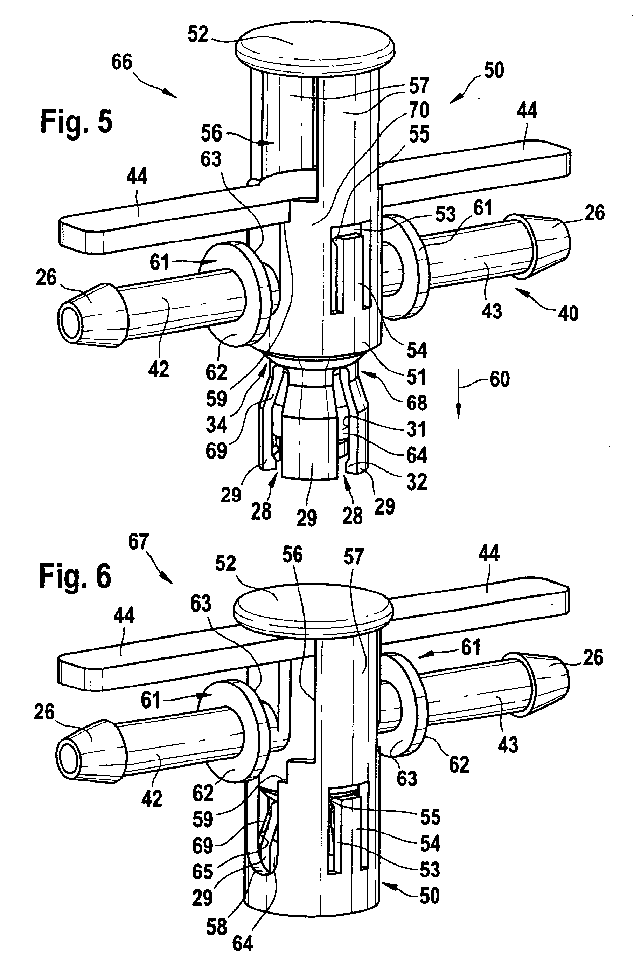

Im oberen Bereich des in Fig. 3.1 dargestellten Steckerkörpers 21 aus einem niederschmelzenden Kunststoffmaterial (Thermoplast) sind ein kurzer Steckerkörperfinger 23 sowie ein langer Steckerkörperfinger 24 angespritzt. Diese dienen der Führung einer in Fig. 3.1 nicht dargestellten, an der Aussenfläche des Steckerkörpers 21 in vertikale Richtung bewegbar geführten Hülse (vergleiche Fig. 5 und 6). Im unteren Bereich des Steckerkörpers 21 der Steckerverbindung mit einseitigem Anschluss 22 sind federnd ausgebildete Laschen 29 angespritzt. Die federnd ausgebildeten Laschen 29 sind durch einzelne zwischen den federnden Laschen 29 vorgesehene Freiräume 28 voneinander getrennt. Oberhalb der federnd ausgebildeten Laschen 29 am Steckerkörper 21 weist der Steckerkörper 21 gemäß des in Fig. 3.1 dargestellten Ausführungsbeispieles eine Umfangsnut 27 auf, die von einer ringförmig ausgebildeten Anschlagfläche 34 begrenzt sein kann. Die am Steckerkörper 21 ringförmig ausgebildete Umfangsnut 27 sowie die diese begrenzende Anschlagfläche 34 werden in einem Bereich verringerten Durchmessers 68 des Steckerkörpers 21 beim Spritzgießen desselben ausgebildet.

Die Freiräume 28 zwischen den im unteren Bereich des Steckerkörpers 21 angespritzten federnd ausgebildeten Laschen 29 erlauben eine Durchführung flexibler Leitungsanschlüsse einerseits und ermöglichen andererseits eine Aufweitung der federnden Laschen 29 bei Montage des Steckerkörpers 21 auf eine in Fig. 3.1 nicht dargestellte Verbindungsstelle eines Bauteils wie beispielsweise eines Kraftstoffinjektors eines Kraftstoffversorgungssystems für Verbrennungskraftmaschinen.

Fig. 3.2 zeigt die Unteransicht des Steckerkörpers gemäß der Darstellung in Fig. 3.1.

Aus der Unteransicht gemäß Fig. 3.2 des Steckerkörpers 21 geht hervor, dass sich der Leitungsanschluss 22 mit Kegelfläche 26 und ringförmig ausgebildeten Steg 30 koaxial zum langen Steckerkörperfinger 24, der im oberen Bereich des Steckerkörpers 21 angespritzt ist, erstreckt. Im Ausführungsbeispiel des Steckerkörpers 21 gemäß Fig. 3.2 sind am Umfang des Steckerkörpers 21 mehrere - hier vier- federnd ausgebildete Laschen 29 angespritzt, die jeweils durch senkrecht zur Zeichenebene gemäß Fig. 3.2 verlaufende Freiräume 28 voneinander getrennt sind. Die eine in Fig. 3.2 nicht dargestellte Verbindungsstelle beispielsweise eines Kraftstoffinjektors umschließenden Innenflächen der federnd ausgebildeten Laschen 29 sind mit Bezugszeichen 31 gekennzeichnet, die jeweils einen Bund 32 aufweisen.

In Fig. 3.3 ist ein Halbschnitt durch den Steckerkörper gemäß des Ausführungsbeispieles in Fig. 3.1 wiedergegeben. Aus der Darstellung gemäß Fig. 3.3 geht hervor, dass jede der unteren Bereich des Steckerkörpers 21 ausgebildeten federnden Laschen 29 eine Anlagefläche 31 umfasst, die am unteren Ende des Steckerkörpers 21 in einen bundartigen Vorsprung 32 übergeht, mit welchem die federnden Laschen 29 am Steckerkörper 21 eine Verbindungsstelle, z. B. einen Anschlussnippel, eines Kraftstoffinjektors umschließen. Die Wandstärke des Steckerkörpers 21 gemäß Fig. 3.3 ist mit Bezugszeichen 33 gekennzeichnet und liegt im oberen des Steckerkörpers 21 über der Materialstärke, in welcher die im unteren Bereich des Steckerkörpers 21 federnd ausgebildeten Laschen 29 gespritzt sind. Mit Bezugszeichen 27 ist die Umfangsnut bezeichnet, welche an der Aussenumfangsfläche des Stekkerkörpers 21 gemäß der Darstellung in Fig. 3.3 ausgebildet ist und den Steckerkörper 21 in einen Bereich mit federnd ausgebildeten Laschen 29 und in einen Bereich mit erhöhter Wandstärke 33, in welchem auch der Leitungsanschluss 22 angeordnet ist, unterteilt.

Figur 3.4 ist ein Schnitt durch den Steckerkörper, wie in Fig. 3.2 (III.IV - III.IV) eingezeichnet, zu entnehmen. Innerhalb eines Bereiches mit verjüngtem Durchmesser sind am Steckerkörper 21 gemäß der ersten Ausführungsvariante der erfindungsgemäßen Steckverbindung eine in Umfangsrichtung verlaufende Ringnut 27 ausgebildet, die von einer angeschrägt ausgebildeten Anschlagfläche 34 begrenzt wird. Die Umfangsnut 27 bzw. die Anlagefläche 34 teilt den Steckerkörper 21 gemäß der ersten Ausführungsvariante der erfindungsgemäßen Steckverbindung in einen unteren Bereich, in dem die federnd ausgebildeten Laschen 29 angeordnet sind und in einen Bereich, in welchem der Steckerkörper 21 in erhöhter Wandstärke ausgebildet ist (vergl. Darstellung gemäß Fig. 3.3). Die an der Umfangsfläche des Steckerkörpers 21 ausgebildeten Steckerkörperfinger 23 bzw. 24 sowie der Leitungsanschluss 22 sind in der Schnittdarstellung A-A nicht dargestellt. Jede der federnd ausgebildeten Laschen 29 im unteren Bereich des Steckerkörpers 21 für eine erste Steckverbindung 20 mit einseitigem Leitungsanschluss umfasst eine Anlagefläche 31, die am unteren Ende der federnd ausgebildeten Lasche 29 in einen bundartig ausgebildeten Vorsprung 32 übergeht.

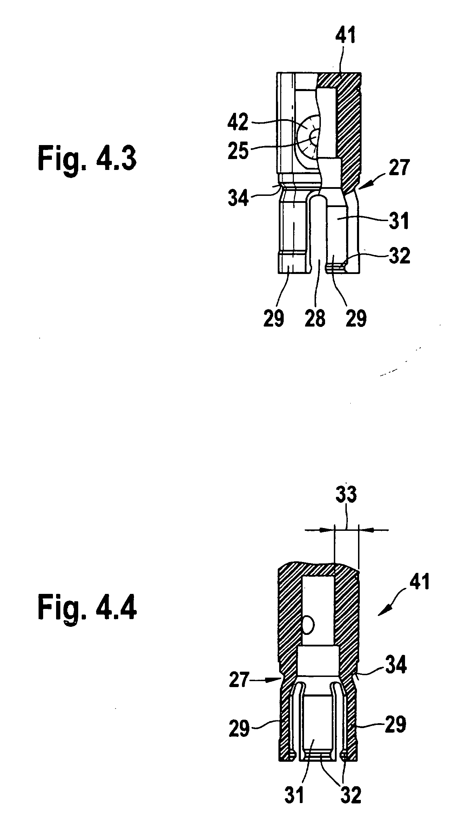

Fig. 4.1 ist eine weitere Ausführungsvariante eines Steckerkörpers der erfindungsgemäßen Steckverbindung zu entnehmen, der beidseitig angeordnete Rücklaufleitungsanschlüsse aufweist.

Im Unterscheid zur Darstellung gemäß den Fig. 3.1 - 3.4 weist ein Steckerkörper 41 einer weiteren Ausführungsvariante der erfindungsgemäßen Steckverbindung in dem Bereich der oberhalb der Umfangsnut 27 ausgebildet ist, einen ersten Leitungsanschluss 42 sowie einen zweiten Leitungsanschluss 43 auf. In der in Fig. 4.1 dargestellten weiteren Ausführungsvariante eines Steckerkörpers der erfindungsgemäß vorgeschlagenen Steckverbindung sind die Leitungsanschlüsse 42 bzw. 43 als Leitungsanschlüsse zur Förderung eines Mediums, wie beispielsweise Kraftstoff ausgebildet. Die beidseits des Steckerkörpers 41 angeordneten Leitungsanschlüsse 42 bzw. 43 könnten auch als Anschlussstellen für elektrische Verbindungsleitungen dienen. Außer Kraftstoff können durch die Leitungsanschlüsse auch von Kraftstoff verschiedene Medien geleitet werden, beispielsweise Wasser oder eine andere Flüssigkeit. Ferner können elektrische Anschlüsse auch in das Innere der Leitungsanschlüsse 42, 43 geführt werden, z.B. zur Realisierung der Überwachung der Rücklaufleitungen mittels eines Drucksensors.

Die am Steckerkörper 41 angespritzten ersten und zweiten Leitungsanschlüsse 42 bzw. 43 liegen am Steckerkörper 41 unterhalb von Steckerfinger 44, die beide - im Unterschied zur in Fig. 3.1 dargestellten Ausführungsvariante eines Steckerkörpers 21 - von identischer Länge beschaffen sind und dem ersten Leitungsanschluss 42 sowie dem zweiten Leitungsanschluss 43 etwa überdecken. Zwischen dem ersten Leitungsanschluss 42 und dem zweiten Leitungsanschluss 43 und den darüberliegend angespritzten Steckerkörperfingern 44 erstrecken sich stegförmig angespritzte Bundflächen 30, welche in den Fig. 4.1 dargestellte Ausführungsvariante des Steckerkörpers die Steckerkörperfinger 44 mit dem ersten Leitungsanschluss 42 bzw. dem zweiten Leitungsanschluss 43 verbinden. Diese Verbindung dient der Steigerung der mechanischen Festigkeit und zur Verbesserung der Spritzbarkeit. In einer weiteren (nicht dargestellten) Ausführungsform der vorliegenden Erfindung sind die Steckerkörperfinger 44 nicht über die an den Leitungsanschlüssen befindlichen Bundflächen 30 mit den Leitungsanschlüssen 42, 43 verbunden.

Die im oberen Bereich des Steckerkörpers 41 angespritzten Steckerkörperfinger 44 dienen der Führung einer in Fig. 4.1 nicht dargestellten, am Aussenumfang des Steckerkörpers 41 in vertikale Richtung bewegbar aufgenommenen hülsenförmigen Sicherungskörpers. Analog zur ersten Ausführungsvariante des Steckerkörpers 21 gemäß einer ersten erfindungsgemäßen Steckverbindung weisen der erste Leitungsanschluss sowie der zweite Leitungsanschluss 43 jeweils eine kegelförmig ausgebildete Anschlussfläche 26 auf, welche das seitliche Aufschieben eines Rohrleitungsabschnitt aus einem flexiblen Material erleichtert. Die auf den ersten Leitungsanschluss 42 bzw. auf den zweiten Leitungsanschluss 43 über die Kegelfläche 26 jeweils aufgeschobenen Leitungsabschnitte liegen an den Bundflächen 30 an der Aussenumfangsfläche des ersten Leitungsanschlusses 42 bzw. des zweiten Leitungsanschlusses 43 an. Durch die Lage der Bundflächen 30 in Bezug die an den Enden der Leitungsanschlüsse 42 bzw. 43 angespritzten Kegelflächen 26, ist die Aufstecklänge der in Fig. 4.1 über die Leitungsanschlüsse 42 bzw. 43 aufsteckbaren flexiblen Rohrleitungsanschlüsse einfach und sicher kontrolierbar, so dass die Herstellung einer fluiddichten Verbindungen des Steckerkörpers 41 visuell leicht kontrolliert werden kann.

Unterhalb der Umfangsnut 27 an der Aussenumfangsfläche des Steckerkörpers 41 sind analog zur ersten Ausführungsvariante des Steckerkörpers 21 gemäß Fig. 3.1 mehrere - in diesem Ausführungsbeispiel vier - federnd ausgebildete Laschen 29 angeordnet. Zwischen den federnd ausgebildeten Laschen 29 im unteren Bereich des Steckerkörpers 41 gemäß Fig. 4.1 sind einzelne, dass Durchführen flexibler Leitungsanschlüsse gestattende Freiräume 28 ausgebildet. Über die Freiräume 28 zwischen den federnden Laschen 29 wird eine Aufweitung der federnd ausgebildeten Laschen 29 am unteren Bereich des Steckerkörpers 41 bei der Montage auf einen in Fig. 4.1 nicht dargestellte Verbindungsstelle erleichtert.

Fig. 4.2 zeigt eine Unteransicht des Steckerkörpers gemäß der Darstellung in Fig. 4.1.

Der Unteransicht gemäß Fig. 4.2 des Steckerkörpers 41 ist entnehmbar, dass sich der Leitungsabschnitt 42 sowie der zweite Leitungsanschluss 43 die seitlich am Steckerkörper 41 angespritzt sind im wesentlichen in gleicher Länge erstrecken, wie die am Steckerkörper 41 ebenfalls angespritzten Steckerfinger 44. Im unteren Bereich des Steckerkörpers 41 gemäß Fig. 4.2 befindlich, sind die einzelnen federnd ausgebildeten Laschen 29 durch Freiräume 28 von einander getrennt. Analog zur ersten Ausführungsvariante des Steckerkörpers 21 gemäß der Darstellung in Fig. 3.1 weist jede federnd ausgebildete Lasche 29 eine Anlagefläche 31 auf, mit welcher die federnden Laschen 29 im an einer Verbindungsstelle montierten Zustand deren Aussenfläche umgreifen.

Fig. 4.3 zeigt einen Halbschnitt durch die weitere Ausführungsvariante des Steckerkörpers der erfindungsgemäßen Steckverbindung gemäß Fig. 4.1.

Aus dem in Fig. 4.3 dargestellten Halbschnitt geht hervor, dass analog zum Halbschnitt gemäß Fig. 3.3 der ersten Ausführungsvariante des Steckerkörpers 21 mit einseitigem Leitungsanschluss der Steckerkörper 41 in einen oberen Bereich von höherer Materialstärke sowie in einen unterhalb der Umfangsnut 27 liegenden Bereich, in welchem die federnden Laschen 29 angeordnet sind, unterteilt ist. Jede der federnd ausgebildeten Laschen 29 im unteren Bereich des Steckerkörpers 41 gemäß der weiteren Ausführungsvariante weist eine Anlagefläche 31 auf, die am unteren Ende durch einen bundartigen Vorsprung 32 begrenzt ist, der sich auf der Innenseite der federnd ausgebildeten Laschen 29 befindet. Die an der Aussenumfangsfläche des Steckerkörpers 41 angebrachte Umfangsnut 27 wird durch eine schräg verlaufende Anlagefläche 34 begrenzt.

Figur 4.4 stellt einen Schnitt gemäß des in Fig. 4.2 dargestellten Schnittverlaufes IV.IV - IV.IV durch den Steckerkörper gemäß der weiteren Ausführungsvariante dar. Im oberen Bereich des Steckerkörpers 41 ist dieser in einer höheren Materialstärke 33 aus einem niederschmelzenden Kunststoffmaterial beschaffen. Der Steckerkörper 41 wird durch eine Umfangsnut 27, die von einer ringförmig ausgebildeten unterbrochen oder ununterbrochen ausgebildbaren Anlagefläche 34 begrenzt. Unterhalb der Umfangsnut 27 erstrecken sich einzelne - im vorliegenden Ausführungsbeispiel 4 durch Freiräume 28 voneinander getrennte, federnd ausgebildete Laschen 29. Die Innenseite der federnd ausgebildeten Laschen 29 ist als Anlagefläche 31 beschaffen, die am unteren Ende, der hier nicht dargestellten Verbindungsstelle zuweisend, in einen bundartig ausgebildeten Vorsprung 32 auslaufen. Die Freiräume 28 im unteren Bereich des Steckerkörpers 41 ermöglichen eine Aufweitung der federnd ausgebildeten Laschen 29 beim Aufstecken auf eine Verbindungsstelle, wie z. B. einem Anschlussnippel der Rücklaufleitung eines Kraftstoffinjektors einer Kraftstoffeinspritzanlage an einer Verbrennungskraftmaschine.

Fig. 5. zeigt die erfindungsgemäße Steckverbindung mit einer Sicherungshülse in ihrer Offenstellung, wobei der Steckerkörper gemäß Fig. 5 beiseitige Leitungsanschlüsse aufweist.

Die in Fig. 5 dargestellte Steckverbindung 40 mit doppelseitigem Anschluss wird bevorzugt als Kunststoffspritzgießbauteil im 2-Komponenten-Spritzgießverfahren gefertigt. Dazu wird in ein Formwerkzeug eine Kunststoffspritzgießmaschine ein hülsenförmiger Körper 50, der als Sicherungshülse für die erfindungsgemäße Steckverbindung 40 dient, spritzgegossen. Der hülsenförmige Körper 50 wird aus einem höher schmelzenden Kunstoffmaterial, wie z. B. einem hochschmelzenden Thermoplasten in der Kavität der Spritzgießmaschine spritzgegossen. Dabei wird an der Oberseite des hülsenförmigen Körpers 50 ein mit Bezugszeichen 52 bezeichneter Deckelabschluss angespritzt. Unterhalb des Dekkelabschlusses 52 erstrecken sich zwei stegförmige Begrenzungen 57, die eine sich im wesentlichen in vertikale Richtung erstreckende Öffnung 56 begrenzen, in welche Steckerkörperfinger 44 eingreifen.

Nach dem Fertigen des hülsenförmigen Körpers 50 aus einem ersten, höher schmelzenden Kunststoffmaterial erfolgt ein Umsetzen des erhaltenden mit einem Deckelabschnitt 52 versehenen hülsenförmigen Körpers 50 in eine weitere Kavität einer Spritzgießmaschine. Innerhalb der weiteren Kavität der Spritzgießmaschine wird der Steckerkörper 41, einen ersten Leitungsanschluss 42 sowie einen weiteren Leitungsanschluss 43 aufweisend, spritzgegossen. Der Steckerkörper 41 wird aus einem im Vergleich zur Fertigung des hülsenförmigen Körpers 50 eingesetzten höher schmelzenden Kunststoffmaterial, aus einem in Bezug auf dieses Material, niederschmelzenden Material spritzgegossen. Dazu wird bevorzugt ein niederschmelzender Thermoplast gewählt. Die vor dem Spritzgießen des Steckerkörpers 41 in die weitere Kavität der Spritzgießmaschine eingebrachte Hülse 50 dient in entsprechenden Bereichen 70 als Formwerkzeug für den aus dem niederschmelzenden Kunststoffmaterial spritzgegossenen Steckerkörper 41. Diese Bereiche 70 dienen für alle Teile des Steckerkörpers, die von der Hülse 50 in Figur 5 in der geöffneten Position 66 umschlossen werden, als Formwerkzeug. Die restliche Geometrie des Steckerkörpers 41 wird herkömmlich durch Backen und Schieber realisiert, die eine Kavität umschließen.

Aufgrund des gewählten 2-Komponenten-Spritzgießverfahrens ist die teilweise als Formwerkzeug dienende Hülse 50 relativ zum aus einem niederschmelzenden Kunststoffmaterial spritzgegossenen Steckerkörper 41 bewegbar. Durch die an den Steckerkörper 41 angespritzten Steckerkörperfinger 44, welche die Öffnung 56 in der Mantelfläche 41 der Hülse 50 durchsetzen, wird eine vertikale Bewegung der Hülse 50 entlang des Steckerkörpers 41 gewährleistet. In der Mantelfläche 51 der Hülse 50 befinden sich Ausnehmungen 53, welche Sicherungslaschen 54 umschließen. Im oberen Bereich der Sicherungslaschen 54 sind an diesen hakenförmig ausgebildete Vorsprünge 55 angeformt, die der Innenseite der Mantelfläche 51 des hülsenförmigen Körpers 50 zuweisen. Diese rasten bei Bewegung des hülsenförmigen Körpers 50 in Sicherungsrichtung 60, d. h. in Montagerichtung der Steckverbindung 40 mit doppelseitigem Anschluss unterhalb der am Steckerkörper 21 (vergl. Fig. 3.1) bzw. 41 (vergl. Fig. 4.1) ausgebildeten Anlagefläche 34 ein (vergl. Verriegelungsposition 67 gemäß Fig. 6).

Die Hubbewegung des hülsenförmig ausgebildeten Körpers 50 aus einem ersten, höher schmelzenden Kunststoffmaterial relativ zum Steckerkörper 41 wird durch die Dimensionierung der Öffnung 56 zwischen den stegförmigen Bereichen 57 begrenzt. Der Hub des hülsenförmigen Körpers 50 wird durch die vertikale Erstreckung der Öffnung 56 bestimmt. Die Öffnung 56 kann einen Absatz 59 umfassen, an welchem die Steckerfinger 44 in der in Fig. 5 dargestellten geöffneten Position 66 anliegen. In diesem Zustand sind die Sicherungslaschen 54 in der Mantelfläche 51 des hülsenformigen Körpers 50 inaktiv. In dieser Position erfolgt ein Aufstecken des erfindungsgemäß vorgeschlagenen Steckerkörpers 41 auf einen Anschlussnippel 64 z. B. eines Kraftstoffinjektors. Beim Aufstecken der erfindungsgemäßen Steckverbindung 40, einen Steckerkörper 41 und die formschlüssig an diesem aufgenommene, relativ zu diesem bewegbare Hülse 50 umfassend, umgreifen die im unteren Bereich des Steckerkörpers 41 ausgebildeten federnden Laschen 29 den Anschlussnippel 64. Dabei liegen die Anlageflächen 31 der federnd ausgebildeten Laschen 29 an der Aussenfläche des Anschlussnippels 64 an. Die im unteren Bereich der Anlageflächen 31 ausgebildeten bundförmigen Vorsprünge 32 untergreifen den Anschlussnippel 64. Die federnd ausgebildeten Laschen 29, die jeweils durch Freiräume 28 voneinander getrennt sind, weiten sich beim Montieren der Steckverbindung 40 mit den Anschlussnippel 64 gemäß der ihnen innewohnenden Elastizität auf und schnappen bei kompletten Überdecken des Anschlussnippels 64 in ihre ursprüngliche Lage zurück, so dass die Anlageflächen 31 am Anschlussnippel 64 anliegen. In der geöffneten Position 66 sind die federnd ausgebildeten Laschen 29 des Steckerkörpers 41 die unterhalb der Durchmesserverjüngung 68 am Steckerkörper 41 ausgebildet sind, noch nicht vom unteren Bereich der Sicherungshülse 50, deren Mantelfläche 51 die Sicherungslaschen 54 ausgebildet sind, umschlossen.

Eine Sicherung der Steckverbindung 40 am Anschlussnippel 64 erfolgt durch Druck auf den Deckelabschluss 52 des hülsenförmigen Körpers 50 in Sicherungsrichtung 60, die erfindungsgemäß mit der Montagerichtung der Steckverbindung 40 zusammenfällt. Die Sicherungslaschen 29 weisen einen mit Bezugszeichen 69 bezeichneten Übergangsbereich auf, unterhalb dessen sie an der Innenseite Freiflächenabschnitte 31 aufweisen, die in bereits erwähnten bundartig ausgebildeten Vorsprüngen 32 an der Innenseite der federnd ausgebildeten Laschen 29 auslaufen.

Am Steckerkörper 41 sind darüber hinaus der erste Leitungsanschluss 42 sowie der zweite Leitungsanschluss 43 ausgebildet. Die Leitungsanschlüsse 42 bzw. 43 weisen jeweils eine Kegelfläche 26 in ihren Endbereichen auf, sowie hier - abweichend von den Darstellungen gemäß den Fig. 3.1 bzw. 4.1 ringförmig konfigurierte Flächen 61. Die ringförmig konfigurierten Bundflächen 61 weisen eine erste Ringseite 62 sowie eine zweite Ringseite 63 auf. Die erste Ringseite 62 begrenzt die Aufstecklänge, über welche eine flexible Rohrleitung über die Kegelfläche 26 auf die den ersten Leitungsabschnitt 42 bzw. den zweiten Leitungsabschnitt 43 aufgesteckt werden kann. Innerhalb der Durchmesserverjüngung 68 am Steckerkörper 41 ist die Anlagefläche 34 ausgebildet, in welche in der Verriegelungsposition 67 (vergl. Darstellung gemäß Fig. 6), die in Fig. 5 dargestellten Sicherungslaschen 54 an der Mantelfläche 51 des hülsenförmigen Körpers 50 eingreifen.

Fig. 6 zeigt die erfindungsgemäße Steckverbindung mit einem als Sicherungshülse dienenden hülsenförmigen Körper in der Verriegelungsposition.

Durch Druck auf den Deckelabschluss 52 des hülsenförmigen Körpers 50 fährt dieser in Sicherungsrichtung 60 am Aussenumfang des Steckerkörpers 41 herab. Die im unteren Bereich des Steckerkörpers 41 federnd ausgebildeten Laschen 29 haben den Anschlussnippel 64 umgriffen und liegen mit den sich an den Übergangsbereich 69 der anschließenden Anlageflächen 31 auf ihrer Innenseite an der Aussenumfangsfläche des Anschlussnippels 64 an. Beim Bewegen des hülsenförmigen Körpers 50 in Sicherungsrichtung 60 umgreift die Mantelfläche 51 die Aussenseiten der federnd ausgebildeten Laschen 29. Die verriegelte Position 67 der Steckverbindung 40 wird dann erreicht, wenn die an der in der Mantelfläche 51 des hülsenförmigen Körpers 50 ausgebildeten Sicherungslaschen 54 mit ihren Vorsprüngen 55 an der Anlagefläche 34 des Steckerkörpers 21 bzw. 41 (vergl. Darstellung gemäß Fig. 3.1 und Fig. 4.1) anliegen. In der Verriegelungsposition 67 gemäß Fig. 4 liegt der Deckelabschluss 52 teilweise auf den Steckerkörperfingern 44, die sich in radialer Richtung beidseits des Steckerkörpers 41 erstrecken, auf. In der in Fig. 6 dargestellten Verriegelungsposition 67 sind die sich in vertikale Richtung erstreckenden Fortsätze der Öffnungen 56 in der Mantelfläche 51 des hülsenförmigen Körpers 50 zu erkennen. Der Fortsatz der Öffnung 56 läuft in einer Bezugszeichen 58 bezeichneten Rundung aus, die der Umfangskrümmung des ersten Leitungsanschlusses 42 bzw. des weiteren, zweiten Leitungsanschlusses 43 entsprechen kann. In der geöffneten Position 66 gemäß der Darstellung in Fig. 5 liegt die Rundung 58, die die Öffnung 56 begrenzt, am unteren Bereich der Umfangsfläche des ersten Leitungsanschlusses 42 und des zweiten, weiteren Leitungsanschlusses 43 an. Die verriegelte Position 67 des hülsenförmigen Körpers 50 am Steckerkörper 41 ist einerseits dadurch gekennzeichnet, dass die Vorsprünge 55 der Sicherungslaschen 54 in der Mantelfläche 51 des hülsenförmigen Körpers 50 die Anlagefläche 34 untergreifen und andererseits die Innenseite der Mantelfläche 51 des hülsenförmigen Körpers 50, die Ausseinseite der federnd ausgebildeten Laschen 29 im unteren Bereich des Steckerkörpers 41 umschließt. An die Innenseite der Mantelfläche 51 des hülsenförmigen Körpers 50 liegt an einer Kontaktfläche 65 rings um den gesamten Umfang der durch Freiräume 28 voneinander getrennten federnd ausgebildeten Laschen 29 an. Dadurch wird der Steckerkörper 41 in seiner Montageposition am Anschlussnippel 64, eines Kraftstoffinjektors beispielsweise, gesichert. Der Verfahrweg des hülsenförmigen Körpers 50, der als Sicherungshülse des Steckerkörpers 51 dient, wird durch die Länge der Öffnung 56 in der Mantelfläche 51 des hülsenförmigen Körpers 50 bestimmt.

Fig. 7 zeigt die erfindungsgemäße ausgebildeten Steckerverbindungen in unterschiedlichen Ausführungsvarianten mit Sicherungssteckern in verrasteten Positionen.

In Fig. 7 ist ein Kraftstoffrücklaufsystem 80 zu entnehmen, an welchem die erfindungsgemäß vorgeschlagene Steckverbindung 20, 40 in ihren Ausführungsvarianten in vorteilhafter Weise eingesetzt werden kann. Die einzelnen an Injektormontagestellen 82 mit den erfindungsgemäß ausgebildeten Steckverbindungen 20 und 40 versehbaren Injektorbaugruppen sind in der Darstellung gemäß Fig. 7 nicht enthalten. Die hülsenförmigen Körper 50, die als Sicherungshülsen dienen, befinden sich jeweils in ihrer verriegelten Position 67, so dass die federnden Laschen 29 der Sicherungskörper 21 bzw. 41, die vom hülsenförmigen Körper 50 überdeckt sind, an in Fig. 7 ebenfalls nicht dargestellte Anschlussnippel 64 verrastet sind. Die einzelnen Leitungsanschlüsse zwischen den Steckverbindungen 20 bzw. 40 können durch Rücklaufleitungsabschnitte 83 aus einem flexiblen Material miteinander verbunden sein. Die erfindungsgemäße erste Steckverbindungvariante 20 wird dabei bevorzugt im Endbereich des Kraftstoffrücklaufsystems 80 angeordnet, da der Steckerkörper 21 gemäß dieser Variante lediglich einen Leitungsanschluss aufweist. Die Konfiguration des Kraftstoffrücklaufleitungssystems 80 - hier an einer sechszylindrigen Verbrennungskraftmaschine gezeigt - richtet sich im wesentlichen nach der Anordnung der Kraftstoffinjektoren im Zylinderkopfbereich der Verbrennungskraftmaschine. Anstelle im wesentlichen gerade laufender Rohrleitungsabschnitte 83 können auch Knieabschnitte 84 eingesetzt werden, die an einem Druckhalteventil 81 angeschlossen werden können. Eine visuelle Kontrolle der gesicherten Position kann durch einfache Detektion der Position des Deckelabschnittes 52 des hülsenförmigen Körpers 50 vorgenommen werden, der oberhalb der Steckerkörperfinger 23, 24 bzw. 44 am Falle des Steckerkörpers 41 liegen muss. In diesem Zustand befinden sich die hülsenförmigen Körper 50 in ihrer verriegelten Position, so dass die Montageposition des Steckerkörpers 21 bzw. 41 an einem Anschlussnippel 64 eines nicht dargestellten Kraftstoffinjektors gesichert ist.

Die Ausführungsvarianten der erfindungsgemäßen Steckverbindung 20 bzw. 40 jeweils einen hülsenförmigen Körper 50 umfassend, der an einem Steckerkörper 21 bzw. 41 in vertikaler Richtung verschiebbar angeordnet ist, werden im 2-Komponenten-Spritzgießverfahren hergestellt, so dass keine separate Montage einer Steckersicherung mehr erforderlich ist. Die Steckverbindung 20 bzw. 40 fällt in geöffneter Stellung fertig ohne zusätzliche Montage als werkzeugfallendes Werkstück aus einer Spritzgußmaschine. Mit der erfindungsgemäßen Lösung fallen die Montagerichtung der Steckverbindung 20 bzw. 40 als auch die Steckersicherungsrichtung 60 zusammen. Die Steckerkörper 21 bzw. 41 und die diese umgebende Sicherungshülse 50 stellen ein Bauteil dar, wodurch am Injektor ein größerer Freiraum zu einer Beschriftung, beispielsweise zur Kennzeichnung von Lieferchargen, geschaffen werden kann. Darüber hinaus ist von erheblichen Vorteil, dass die erfindungsgemäß beschaffene Steckverbindung 20 bzw. 40 in ihrer Verriegelungsposition 67 am Anschlussnippel 64 um 360° frei drehbar ist, so dass beengten Einbauverhältnissen hinsichtlich der Führung der Rohleitungsabschnitte 83 bzw. 84 in vollem Umfang Rechnung getragen werden kann. Bei der Demontage der erfindungsgemäß beschaffenen Steckverbindung 20 bzw. 40 wird der hülsenförmige Körper 50 am Deckelabschluss 52 nach oben gezogen. Dadurch wird die Verriegelung der federnden Laschen 29 an einem Anschlussnippel 64 bzw. die Verrastung der Sicherungslaschen 54 an der Anlagfläche 34 am Steckerkörper 21 bzw. 41 aufgehoben. Durch weiteren Zug am Deckelabschluss 52 kann die Steckverbindung 20 bzw. 40 in ihrer geöffneten Position 66 vom Anschlussnippel 64 komplett abgezogen werden. Es ist eine einfache visuelle Abfragemöglichkeit der Stecksicherheit gegeben, einfach durch Kontrolle der Position des hülsenförmigen Körpers 50. Eine formschlüssige Verriegelung in der Verriegelungsposition 67 wird durch die Ausbildung der die Steckerkörper 21 bzw. 41 umschließenden Sicherungshülse 50 gewährleistet, wodurch eine verliersichere Verrastung entsteht. Es kann eine extrem einfache werkzeuglose Demontage erfolgen, wobei Beschädigungsgefahr des Anschlussnippels 64 minimiert ist. Ferner sind zum Herstellen einer dichtenden Steckverbindung geringste Steckkräfte erforderlich.

Die als integrierte Stützlaschen dienenden Steckerkörperfinger 44 vermeiden eine Beschädigung der Leitungsanschlüsse 42, 43 bei der Montage. Dabei wirkt eine Montagekraft senkrecht auf die Steckerkörperfinger 44 zum Aufschieben der Steckerverbindungen 20, 40 auf einen damit zu verbindenden (nicht dargestellten) Anschlussnippel. Diese Kraft kann nicht mittig auf den Deckelabschluss 52 wirken, da die Steckverbindung sonst verschlossen würde, bevor sie auf den Anschlussnippel aufgeschoben wäre. Die Steckerkörperfinger 44 verhindern eine Krafteinwirkung auf die bruchgefährdeten Leitungsanschlüsse 42, 43.

### Bezugszeichenliste

- 1: Rücklaufanschluss
- 2: Anschlusssockel
- 3: Sicherungsfeder
- 4: erster Sicherungsfederschenkel
- 5: zweiter Sicherungsfederschenkel
- 6: Mittelabschnitt
- 7: Ummantelung
- 8: Blechfalz
- 9: Leitungsquerschnitt
- 10: Aufnahmebereich

- 20: Steckverbindung (einseitiger Anschluss)
- 21: Steckerkörper
- 22: Leitungsanschluss
- 23: kurzer Steckerkörperfinger
- 24: langer Steckerkörperfinger
- 25: Leitungsquerschnitt
- 26: Kegelfläche
- 27: Umfangsnut
- 28: Freiraum
- 29: federnde Lasche
- 30: Steg/Bund
- 31: Anlagefläche
- 32: Vorsprung an Lasche 29
- 33: Wandstärke Steckerkörper
- 34: Anlagefläche Vorsprünge

- 40: Steckverbindung (doppelseitiger Anschluss)
- 41: Steckerkörper
- 42: erster Leitungsanschluss
- 43: zweiter Leitungsanschluss
- 44: Steckerfinger

- 50: hülsenförmiger Körper (Sicherungshülse)
- 51: Mantelfläche
- 52: Deckelabschluss
- 53: Öffnung
- 54: Sicherungslasche
- 55: Vorsprung
- 56: Vertikalöffnung
- 57: stegförmige Begrenzung
- 58: Rundung
- 59: Absatz für Steckerkörperfinger
- 60: Sicherungsrichtung
- 61: Bund an Leitungsanschluss
- 62: erste Seite
- 63: zweite Seite
- 64: Anschlussnippel Kraftstoffinjektor
- 65: Kontaktfläche Innenseite hülsenförmiger Körper
- 66: geöffnete Position
- 67: Verriegelungsposition
- 68: Durchmesserverjüngung
- 69: Übergangsbereich
- 70: Bereiche des hülsenförmigen Körpers, die ein Formwerkzeug bilden

- 80: Kraftstoffrücklaufleitungsystem
- 81: Druckhalteventil
- 82: Injektormontagestelle
- 83: Rücklaufleitungsabschnitt
- 84: Rücklaufleitungsknieabschnitt

## Patentansprüche

1. Verfahren zur Herstellung einer Steckverbindung (20, 40, 50) mit mindestens einer Anschlussstelle (22, 42; 43) mit nachfolgenden Verfahrensschritten:
a) ein hülsenförmiger Körper (50) aus einem ersten Material, wird in einer Kavität gegossen,
b) der erhaltene hülsenförmige Körper (50) wird in eine weitere Kavität eingebracht,
c) ein Steckerkörper (21, 41) aus einem zweiten Material wird in der den hülsenförmigen Körper (50) aus dem ersten Material aufnehmenden weiteren Kavität gegossen.

2. Verfahren gemäß Anspruch 1, **dadurch gekennzeichnet, dass** ein Bereich (70) des hülsenförmigen Körpers (50) als Formwerkzeug zum Formen des Steckerkörpers (21, 41) dient.

3. Verfahren gemäß Anspruch 1 oder 2, **dadurch gekennzeichnet, dass** das erste Material ein bei höheren Temperaturen fließfähiges Kunststoffmaterial ist, das in der Kavität spritzgegossen wird und das zweite Material ein bei niedrigeren Temperaturen fließfähiges Kunststoffmaterial ist, das in der weiteren Kavität spritzgegossen wird.

4. Verfahren gemäß Anspruch 1 oder 2, **dadurch gekennzeichnet, dass** das erste Material ein höherschmelzender Thermoplast ist.

5. Verfahren gemäß Anspruch 1 oder 2, **dadurch gekennzeichnet, dass** das zweite Material ein niederschmelzender Thermoplast ist.

6. Verfahren gemäß Anspruch 1 oder 2, **dadurch gekennzeichnet, dass** das erste Material und das zweite Material gleich sind.

7. Verfahren gemäß Anspruch 1, **dadurch gekennzeichnet, dass** am Steckerkörper (21, 41) in der weiteren Kavität ein Bereich mit im Vergleich zum Steckerkörperdurchmesser verjüngten Durchmesser (68) mit einer Anlagefläche (34) angeformt wird.

8. Verfahren gemäß Anspruch 1, **dadurch gekennzeichnet, dass** der Steckerkörper (21, 41) gemäß Verfahrensschritt c), durch Freiräume (28) voneinander getrennte, federnde Laschen umfasst.

9. Steckverbindung (20, 40, 50), insbesondere hergestellt gemäß des Verfahrens nach Anspruch 1, mit einem Steckerkörper (21, 41), welcher mindestens eine Anschlussstelle (22); (42, 43) aufweist, **dadurch gekennzeichnet, dass** ein aus einem ersten Material gefertigter hülsenförmiger Körper (50) in eine Sicherungsrichtung (60) und in eine Entsicherungsrichtung bewegbar an einem Steckerkörper (21, 41) mit federnd ausgebildeter Lasche (29) formschlüssig aufgenommen ist.

10. Steckverbindung (20, 40, 50) gemäß Anspruch 9, **dadurch gekennzeichnet, dass** der hülsenförmige Körper (50) einen Deckelabschnitt (52) aufweist, der über sich in vertikale Richtung erstreckende Stege (57), die eine Ausnehmung (56) begrenzen, mit einem Umfangsabschnitt des hülsenförmigen Körpers (50) verbunden ist.

11. Steckverbindung (20, 40, 50) gemäß Anspruch 10, **dadurch gekennzeichnet, dass** der Steckerkörper (21, 41) auf eine Verbindungsstelle (64) einer Komponente aufgebracht wird und mittels Druck auf den Deckelabschnitt (52) des hülsenförmigen Körpers (50), diesen in Sicherungsrichtung (60) am Steckerkörper (21, 41) in einer Verriegelungsposition (67) verrastet.

12. Steckverbindung gemäß Anspruch 11, **dadurch gekennzeichnet, dass** die Montagerichtung des Steckerkörpers (21, 41) auf die Verbindungsstelle (64) identisch mit der Sicherungsrichtung (60) ist, in der der hülsenförmige Körper (50) am Steckerkörper (21), 41 in die Verriegelungsposition (67) bewegt wird.

13. Steckverbindung gemäß Anspruch 9, **dadurch gekennzeichnet, dass** der hülsenförmige Körper (50) federnd ausgebildete Sicherungslaschen (54) aufweist, die in Ausnehmungen (53) der Mantelfläche (51) des hülsenformigen Körpers (50) angeordnet sind.

14. Steckverbindung gemäß Anspruch 13, **dadurch gekennzeichnet, dass** die Sicherungslaschen 54 in der Mantelfläche (51) einander gegenüberliegend angeordnet sind.

15. Steckverbindung gemäß Anspruch 13, **dadurch gekennzeichnet, dass** die Sicherungslaschen (54) in der Verriegelungsposition (67) die Verbindungsstelle (64) abdecken.

16. Steckverbindung gemäß Anspruch 11, **dadurch gekennzeichnet, dass** der Steckerkörper (21, 41) einen Bereich verringerten Durchmessers (68) aufweist, der von einer umlaufend ausgebildeten Anlagefläche (34) begrenzt ist.

17. Steckverbindung gemäß Anspruch 11, **dadurch gekennzeichnet, dass** der Steckerkörper (21, 41) mindestens einen Steckerkörperfinger (23, 24; 44) aufweist, welcher in die sich in vertikale Richtung erstreckende Ausnehmung (56) des hülsenförmigen Körpers (50) eingreift.

18. Steckverbindung gemäß Anspruch 9, **dadurch gekennzeichnet, dass** diese in ihrer Verriegelungsposition (67) an der Verbindungsstelle (64) frei drehbar aufgenommen ist.

19. Steckverbindung gemäß Anspruch 9, **dadurch gekennzeichnet, dass** zwischen den Federn zu einem Steckerkörper (21, 41) ausgebildeten Laschen (29) Freiräume (28) zur Durchführung flexibler Leitungen vorgesehen sind.

20. Steckverbindung gemäß Anspruch 13, **dadurch gekennzeichnet, dass** die Sicherungslaschen (54) des hülsenförmigen Körpers (50) Vorsprünge (55) aufweisen, welche in der Verriegelungsposition (67) die Anlagefläche (34) am Steckerkörper (21, 41) untergreifen.

21. Steckverbindung gemäß Anspruch 9, **dadurch gekennzeichnet, dass** der Steckerkörper (21, 41) an seinen Anschlussstellen (22); (42, 43) Anschlagflächen (61) und kegelförmige Abschnitte (26) zur Aufnahme flexibler Rohrleitungsabschnitte (83, 84) aufweist.

## Claims

1. Method for producing a plug-type connection (20, 40, 50) having at least one connecting point (22, 42; 43) having the following method steps:
a) a sleeve-shaped body (50) made from a first material is cast in a cavity,
b) the sleeve-shaped body (50) obtained is inserted into a further cavity,
c) a plug body (21, 41) made from a second material is cast in the further cavity which is holding the sleeve-shaped body (50) made from the first material.

2. Method according to Claim 1, **characterized in that** a region (70) of the sleeve-shaped body (50) serves as a die for shaping the plug body (21, 41).

3. Method according to Claim 1 or 2, **characterized in that** the first material is a plastic material which is liquid at relatively high temperatures and is injection moulded in the cavity, and the second material is a plastic material which is fluid at relatively low temperatures and is injection moulded in the further cavity.

4. Method according to Claim 1 or 2, **characterized in that** the first material is a thermoplastic which has a high melting point.

5. Method according to Claim 1 or 2, **characterized in that** the second material is a thermoplastic which has a low melting point.

6. Method according to Claim 1 or 2, **characterized in that** the first material and the second material are identical.

7. Method according to Claim 1, **characterized in that** a region having a reduced diameter (68) compared to the plug body diameter and having a contact face (34) is integrally formed on the plug body (21, 41) in the further cavity.

8. Method according to Claim 1, **characterized in that** the plug body (21, 41) according to method step c) comprises resilient lugs which are separated from one another by free spaces (28).

9. Plug-type connection (20, 40, 50), produced in particular as per the method according to Claim 1, having a plug body (21, 41) which has at least one connecting point (22); (42, 43), **characterized in that** a sleeve-shaped body (50) manufactured from a first material is held in a positively locking fashion on a plug body (21, 41) by means of resilient lugs (29) so as to be moveable in a securing direction (60) and in a releasing direction.

10. Plug-type connection (20, 40, 50) according to Claim 9, **characterized in that** the sleeve-shaped body (50) has a cover section (52) which is connected to a peripheral section of the sleeve-shaped body (50) by means of vertically-extending webs (57) which delimit a recess (56).

11. Plug-type connection (20, 40, 50) according to Claim 10, **characterized in that** the plug body (21, 41) is placed on a connection point (64) of a component and, by means of pressure on the cover section (52) of the sleeve-shaped body (50), the latter is latched, in the securing direction (60), to the plug body (21, 41) in a locking position.

12. Plug-type connection according to Claim 11, **characterized in that** the direction in which the plug body (21, 41) is mounted onto the connection point (64) is identical to the securing direction (60) in which the sleeve-shaped body (50) is moved into the locking position (67) on the plug body (21, 41).

13. Plug-type connection according to Claim 9, **characterized in that** the sleeve-shaped body (50) has resilient securing lugs (54) which are arranged in recesses (53) of the lateral surface (51) of the sleeve-shaped body (50).

14. Plug-type connection according to Claim 13, **characterized in that** the securing lugs (54) in the lateral surface (51) are arranged opposite one another.

15. Plug-type connection according to Claim 13, **characterized in that**, in the locking position (67), the securing lugs (54) cover the connection point (64).

16. Plug-type connection according to Claim 11, **characterized in that** the plug body (21, 41) has a region of reduced diameter (68) which is delimited by a peripheral contact face (34).

17. Plug-type connection according to Claim 11, **characterized in that** the plug body (21, 41) has at least one plug body finger (23, 24; 44) which engages in the vertically-extending recess (56) of the sleeve-shaped body (50).

18. Plug-type connection according to Claim 9, **characterized in that**, in its locking position (67), said plug-type connection is held on the connection point (64) in a freely rotatable manner.

19. Plug-type connection according to Claim 9, **characterized in that** free spaces (28) for passing through flexible lines are provided between the lugs (29) which are resilient relative to a plug body (21, 41).

20. Plug-type connection according to Claim 13, **characterized in that** the securing lugs (54) of the sleeve-shaped body (50) have projections (55) which, in the locking position (67), engage under the contact face (34) on the plug body (21, 41).

21. Plug-type connection according to Claim 9, **characterized in that**, at its connecting points (22); (42, 43), the plug body (21, 41) has stop faces (61) and conical sections (26) for holding flexible tube line sections (83, 84).

## Revendications

1. Procédé de fabrication d'un connecteur (20, 40, 50) avec au moins un point de raccordement (22, 42 ; 43) comprenant les étapes suivantes :
a) un corps en forme de douille (50) composé d'un premier matériau est coulé dans une cavité,
b) le corps en forme de douille (50) obtenu est introduit dans une autre cavité,
c) un corps de connecteur (21, 41) composé d'un second matériau est coulé dans l'autre cavité recevant le corps en forme de douille (50) composé du premier matériau.

2. Procédé selon la revendication 1,
**caractérisé en ce qu'**
une zone (70) du corps en forme de douille (50) sert d'outil de formage pour former le corps de connecteur (21, 41).

3. Procédé selon la revendication 1 ou 2,
**caractérisé en ce que**
le premier matériau est une matière plastique coulée par injection dans la cavité à de hautes températures et le second matériau est une matière plastique coulée par injection dans l'autre cavité à des températures plus basses.

4. Procédé selon la revendication 1 ou 2,
**caractérisé en ce que**
le premier matériau est une matière thermoplastique fondant à hautes températures.

5. Procédé selon la revendication 1 ou 2,
**caractérisé en ce que**
le second matériau est une matière thermoplastique fondant à basses températures.

6. Procédé selon la revendication 1 ou 2,
**caractérisé en ce que**
le premier matériau et le second matériau sont identiques.

7. Procédé selon la revendication 1,
**caractérisé en ce qu'**
une zone de diamètre réduit (68) par rapport au diamètre du corps de connecteur et munie d'une surface d'appui (34) est façonnée sur le corps de connecteur (21, 41) dans l'autre cavité.

8. Procédé selon la revendication 1,
**caractérisé en ce que**
le corps de connecteur (21, 41) selon l'étape de procédé c) comprend des languettes élastiques séparées les unes des autres par des espaces libres (28).

9. Connecteur (20, 40, 50), en particulier fabriqué au moyen du procédé selon la revendication 1, comprenant un corps de connecteur (21, 41) qui présente au moins un point de raccordement (22 ; 42, 43),
**caractérisé en ce qu'**
un corps en forme de douille (50) composé d'un premier matériau peut être déplacé dans une direction de blocage (60) et dans une direction de déblocage pour être reçu en liaison par la forme sur un corps de connecteur (21, 41) comprenant une languette élastique (29).

10. Connecteur (20, 40, 50) selon la revendication 9,
**caractérisé en ce que**
le corps en forme de douille (50) présente une partie de couvercle (52) reliée, par des talons (57) étendus dans la direction verticale et délimitant l'évidement (56), à une partie périphérique du corps en forme de douille (50).

11. Connecteur (20, 40, 50) selon la revendication 10,
**caractérisé en ce que**
le corps de connecteur (21, 41) est appliqué sur un point de liaison (64) d'un composant et enclenche dans une direction de verrouillage (60) le corps en forme de douille (50) sur le corps de connecteur (21, 41) en position de blocage (67), au moyen d'une pression exercée sur la partie de couvercle (52).

12. Connecteur selon la revendication 11,
**caractérisé en ce que**
la direction de montage du corps de connecteur (21, 41) sur le point de liaison (64) est identique à la direction de blocage (60) dans laquelle se déplace le corps en forme de douille (50) dans la position de verrouillage (67) sur le corps de connecteur (21, 41).

13. Connecteur selon la revendication 9,
**caractérisé en ce que**
le corps en forme de douille (50) présente des languettes de blocage élastiques (54) disposées dans des évidements (53) de sa surface d'enveloppe (51).

14. Connecteur selon la revendication 13,
**caractérisé en ce que**
les languettes de blocage (54) sont opposées les unes aux autres dans la surface d'enveloppe (51).

15. Connecteur selon la revendication 13,
**caractérisé en ce que**
les languettes de blocage (54) recouvrent le point de liaison (64) dans la position de verrouillage (67).

16. Connecteur selon la revendication 11,
**caractérisé en ce que**
le corps de connecteur (21, 41) présente une zone de diamètre réduit (68) délimitée par une surface d'appui périphérique (34).

17. Connecteur selon la revendication 11,
**caractérisé en ce que**
le corps de connecteur (21, 41) présente au moins un doigt (23, 24 ; 44) qui s'engage dans l'évidement (56) du corps en forme de douille (50) s'étendant dans la direction verticale.

18. Connecteur selon la revendication 9,
**caractérisé en ce que**
celui-ci est reçu librement en rotation sur le point de liaison (64) dans sa position de verrouillage (67).

19. Connecteur selon la revendication 9,
**caractérisé en ce que**
des espaces libres (28) sont prévus pour le passage de conduites flexibles entre les languettes (29) formant des ressorts par rapport au corps de connecteur (21, 41).

20. Connecteur selon la revendication 13,
**caractérisé en ce que**
les languettes de blocage (54) du corps en forme de douille (50) présentent des saillies (55) qui s'engagent dans la position de verrouillage (67) en dessous de la surface d'appui (34) ménagée sur le corps de connecteur (21, 41).

21. Connecteur selon la revendication 9,
**caractérisé en ce que**
le corps de connecteur (21, 41) présente des surfaces d'appui (61) et des parties coniques (26) pour la réception de parties de conduites tubulaires flexibles (83, 84) sur ses points de raccordement (22 ; 42, 43).
